# EUROPEAN PATENT SPECIFICATION

(11) **EP 1 515 404 B1**
(45) Date of publication and mention of the grant of the patent: **23.04.2008**
(21) Application number: 04380175.2
(22) Date of filing: 27.08.2004
(51) Int. Cl.: H01S 1/02

(54) **Method for generating a coherent electromagnetic radiation of a frequency comprised between 1 GHz and 10THz and device for implementation thereof**
Verfahren zur Erzeugung von kohärenten elektromagnetischen Wellen im Frequenzbereich 1GHz - 10THz und Vorrichtung dafür
Méthode de génération de rayonnement électromagnétique cohérent dans le domaine spectrale 1GHz - 10THz et dispositif associé

(30) Priority: 29.08.2003 ES 200302062
(43) Date of publication of application: 16.03.2005
(73) Proprietor: S.A. Minera Catalano-Aragonesa, 50001 Zaragoza (ES)
(72) Inventor: Tejada Palacios, Javier, 08028 Barcelona (ES); Chudnovsky, Eugene M., Hartysdale, N.Y. 10530 (US)
(74) Representative: Schäfer, Matthias W.

(56) References cited:
- EP-A- 1 304 776
- US-A1- 2004 100 997
- PAULSEN C ET AL: "Studies of hysteresis in Mn12Ac" JOURNAL OF MAGNETISM AND MAGNETIC MATERIALS, ELSEVIER SCIENCE PUBLISHERS, AMSTERDAM, NL, vol. 140-14, February 1995 (1995-02), pages 1891-1892, XP004067408 ISSN: 0304-8853
- TEJADA J ET AL: "Quantum dynamics of crystals of molecular nanomagnets inside a resonant cavity" PHYSICAL REVIEW B (CONDENSED MATTER AND MATERIALS PHYSICS) APS THROUGH AIP USA, vol. 68, no. 1, 30 July 2003 (2003-07-30), pages 014431-1-014431-5, XP002321046 ISSN: 0163-1829
- ROMALIS M V ET AL: "Inhomogeneously broadened spin masers" PHYSICAL REVIEW, A. GENERAL PHYSICS, AMERICAN INSTITUTE OF PHYSICS. NEW YORK, US, vol. 60, no. 2, August 1999 (1999-08), pages 1385-1402, XP002310217 ISSN: 0556-2791
- TEJADA J. ET AL: 'Electromagnetic radiation produced by avalanches in the magnetization reversal of Mn12-acetate' APPLIED PHYSICS LETTERS vol. 84, no. 13, 29 March 2004, pages 2373 - 2375
- DEL BARCO E. ET AL: 'High-frequency resonant experiments in Fe8 molecular clusters' PHYSICAL REVIEW B vol. 62, no. 5, 01 August 2000, pages 3018 - 3021, XP002310214

## Description

The present invention concerns a method for generating coherent electromagnetic radiation of a frequency comprised between 1 GHz and 10 THz and devices for its implementation. In particular, the invention describes the obtaining of coherent radiation and materials and means for its embodiment.

So, the object of the invention has application in:
- Communications.- By generating electromagnetic waves of higher frequency than those conventionally used, a new field is opened due to the bandwidth being expanded and extended.
- Medicine.- For the formation of images of tissues and other soft materials, as well for identification at the molecular level.
- Security.- For the creation of images and identification of objects, such as for example knives and firearms, this form of control being non-destructive and non-hazardous for the health of persons.
- Reprography.- For the reading and reproduction of images and texts arranged three-dimensionally.

### BACKGROUND TO THE INVENTION

It has recently been demonstrated that radiation of frequencies of the order of THz is important in communications and in the formation of images of tissues and other soft materials. For example, some studies have shown that radiation of frequency in the THz range can be used for detecting cancer of the skin in advance.

Nevertheless, the generation of radiation of frequency in the THz range cannot, as it is used today, be considered satisfactory. For example, radiation of frequencies of the order of THz used in industry for quality control in the manufacture of integrated circuits is produced with equipment of the size of a room, and with a very high economic cost.

A recent patent application by the same inventors, pending publication, has described a method for obtaining coherent electromagnetic radiation of a frequency comprised between GHz and THz, applying a variable magnetic field on a molecular magnet located in a resonant cavity. This phenomenon is also detailed in the article "Quantum dynamics of crystals of molecular nanomagnetics inside a resonant cavity", PHYSICAL REVIEW B. 68, 014431 (2003).

The theoretical possibility of superradiance in molecular magnets has been suggested by E.M. Chudnovsky and D.A. Garanin in the article published in Phys. Rev. Lett. 89 157201 (2002).

It has also been known for some time (C. Paulsen and J.G. Park, pp. 189-207 in Quantum Tunnelling of Magnetization - QTM'94, edited by L. Gunther and B. Barbara (Kluwer, Dordrecht, Netherlands 1995) that at low temperatures and with a sufficiently fast rate of sweeping of the different values of the magnetic field, large crystals of Mn12-Ac display a sudden change in their magnetization. This effect has been attributed to a thermal avalanche in which the initial relaxation of the magnetization in the direction of the field gives rise to a release of heat which in turn accelerates the relaxation. Direct measurements of the heat emission by crystals of that material, along with measurements of the magnetic relaxation in pulsating fields, confirm the thermal nature of the sudden inversion of the magnetization. Nevertheless, so far, said avalanches have been considered as undesirable effects that prevented large crystals from being used in experimentation.

Further, EP 1 304 776 A2 describes a Terahertz generation process including the steps of magnetically energizing susceptible magnetic particles at temperatures greater than 4.2K; and accumulating the resulting Terahertz lasing mode output of the particles. During the process, filed sweeping rates from 10 mT/s to 150 mT/s were applied.

### DESCRIPTION OF THE INVENTION

According to the present invention, it is proposed to exploit the avalanches generated by abrupt changes in the magnetic field due to the fact that they give rise to a major population inversion of spin energy levels and when these excited states decay coherent electromagnetic radiation is emitted with various wavelengths.

Essentially, the invention consists of a method having the features of claim 1 and a device having the features of claim 22. Advantageous embodiments are described in the dependent claims.

It can also be considered that the coherent electromagnetic radiation obtained is superradiance, in the case that the size of the sample is less than the shortest of the wavelengths λ which the material of the sample can emit and complying with the phenomenon of coherence, with a minimum number of molecules participating.

In an alternative version, the sample is arranged in a cavity under the effect of a magnetic field of fixed

intensity and at a temperature at which the material displays magnetic hysteresis phenomena, the sample is then made to rotate in such a way that provokes an avalanche phenomenon (thermal or electromagnetic) which in turn gives rise to the stated population inversion.

In order to increase the power of the radiation, it has been planned in the proposed method to introduce pulses of heat for the said sample while it rotates with respect to a magnetic field of fixed intensity or while it is subjected to a variable magnetic field. Said pules of heat are supplied at the same rate as the said variation in the magnetic field perceived by the sample.

The material constituting the sample can also comprise monodomain magnetic particles with magnetic anisotropy.

Other relevant features and aspects of the invention will appear with greater clarity in the description of the examples of embodiment that follow.

Likewise, the sample arranged in a cavity under the effect of a magnetic field at a temperature at which the material displays magnetic hysteresis phenomena, when said magnetic field is varied as a function of time, gives rise to a population inversion and to an emission of coherent electromagnetic radiation with wavelengths λ.

For certain samples of molecular magnets and certain variations of magnetic field, the power of electromagnetic radiation emitted by approximately 25 mg of sample can be of the order of 1 W when the temperature of the sample varies between 1.8° K and 2.4° K.

More specifically, for certain samples of molecular magnets and certain variations of magnetic field, the power of electromagnetic radiation emitted by approximately 25 mg of sample preferably varies between 1 µW and 0.1 µW when the temperature of the sample varies between 1.8° K and 2.4° K.

Likewise, with the new experiments it has been proven that the appearance of magnetic avalanches can be produced before or after the emission of electromagnetic radiation.

The electromagnetic radiation generated after the occurrence of the magnetic avalanche is mostly emitted in the direction of the axis of easy magnetization, while the radiation that is originated prior to the occurrence of the magnetic avalanche is mostly emitted in the direction perpendicular to the axis of easy magnetization.

It has also be confirmed that the variation of the magnetic field can be produced at a rate or speed of up to 100 mT/s.

It has likewise been confirmed that the variations in the magnetic field occurring when a permanent magnet, electromagnet or superconductor is made to rotate in the vicinity of the sample, in such a way that the magnetic field generated affects it in a variable manner, can reach rates of variation of the field lying between approximately 10 mT/s and 10 kT/s.

In accordance with that proven earlier, the variation in the magnetic field can be produced by means of changes in the current strength circulating in a superconductor in the vicinity of the sample in such a way that the magnetic field that is generated affects it.

The material used as sample can likewise be [(C₆H₁₅N₃)6Fe₈(µ₃-O)₂(µ₂-O)₂(Br₇(H₂O) )Br₈H₂O], also known as Fe8, or molecular aggregates of the same type.

### BRIEF DESCRIPTION OF THE DRAWINGS

Fig. 1 describes the spin energy of the levels of Mn₁₂-Acetate under the effects of an external magnetic field in which the spin energy levels whose quantum numbers corresponding to the third component of spin verifying m + m' = 3 are degenerated. The arrows signal the relaxation path from the initial magnetized state in the negative direction of the z axis to the final magnetized state in the positive direction of the z axis.
Fig. 2 shows an experimental arrangement for the creation and detection of superradiance by a bolometer.
Fig. 3(A) shows the hysteresis curve of a sample of twenty crystals of Mn₁₂-Ac at T = 2 K. The avalanches in the change of magnetization occur when the value of the magnetic field is approximately ± 1.4 Tesla.
Fig. 3(B) shows the variation in the potential drop in the InSb bolometer as a function of the magnetic field. The radiation peaks detected by the bolometer coincide with the change of magnetization.
Fig. 4 schematically shows an example of embodiment of a device for achieving a variable magnetic field using a permanent magnet (2), an electromagnet (2) or a superconductor (2) in rotation with respect to the sample (1) at rest.
Fig. 5 schematically shows an example of embodiment of a device enabling the sample (1) to perceive a variable magnetic field due to its own rotation when it is located inside a constant magnetic field generated by a permanent magnet (2), an electromagnet (2) or a superconductor (2).

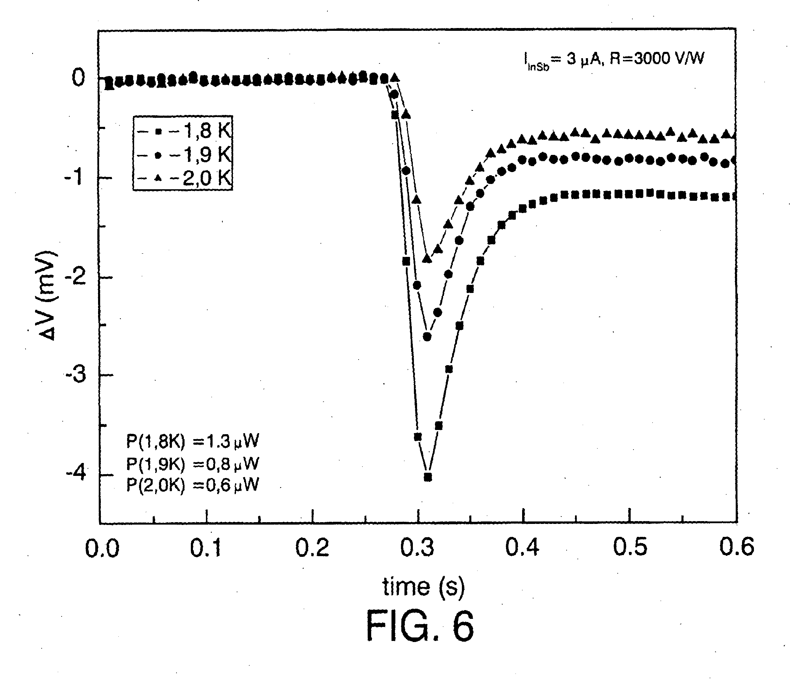

Fig. 6 shows the variation in the power of the radiation detected for different temperatures of the sample.

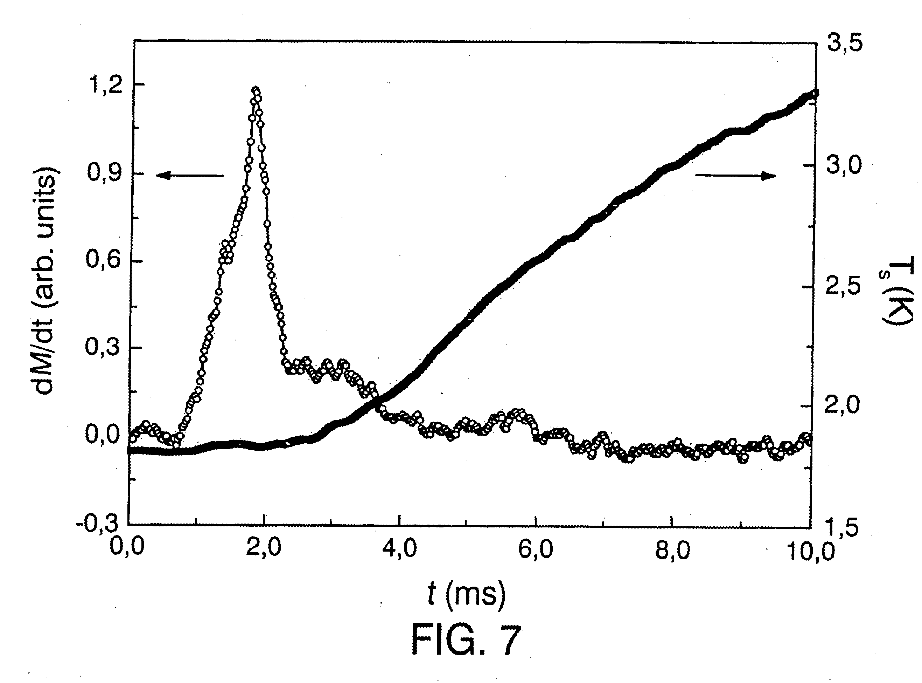

Fig. 7 shows the variation in the temperature of the sample and the variation in the magnetization of the sample as a function of time.

### DETAILED DESCRIPTION OF VARIOUS EXAMPLES OF EMBODIMENT

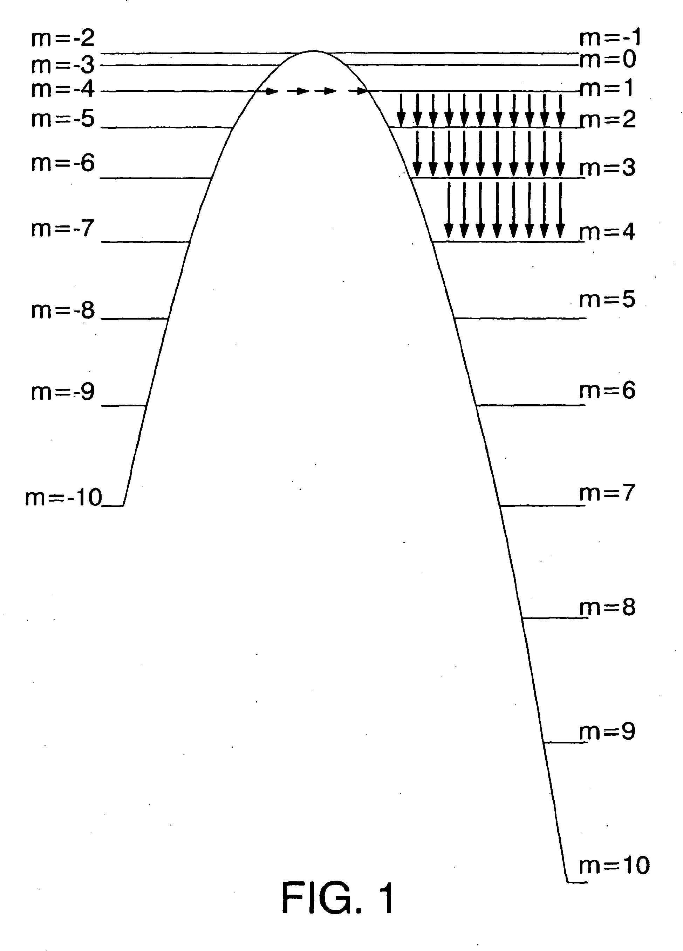

The materials that can be used for generating the said coherent electromagnetic radiation are molecular magnets and monodomain magnetic particles with magnetic anisotropy. They can be both monocrystalline and polycrystalline, and are characterized by possessing energy levels on both sides of what is known as the magnetic anisotropy barrier; Fig. 1 shows the energy levels as a function of the quantum number m for the particular case of Mn₁₂-Ac in the presence of a magnetic field. The energy distance between these levels depends on the value of that barrier and the spin value. In the examples of embodiment described below, the case of molecular magnets of high spin and magnetic anisotropy are discussed.

The working temperature depends on the value of the magnetic anisotropy of the material which, in the materials studied, varies between one degree Kelvin and tens of degrees Kelvin.

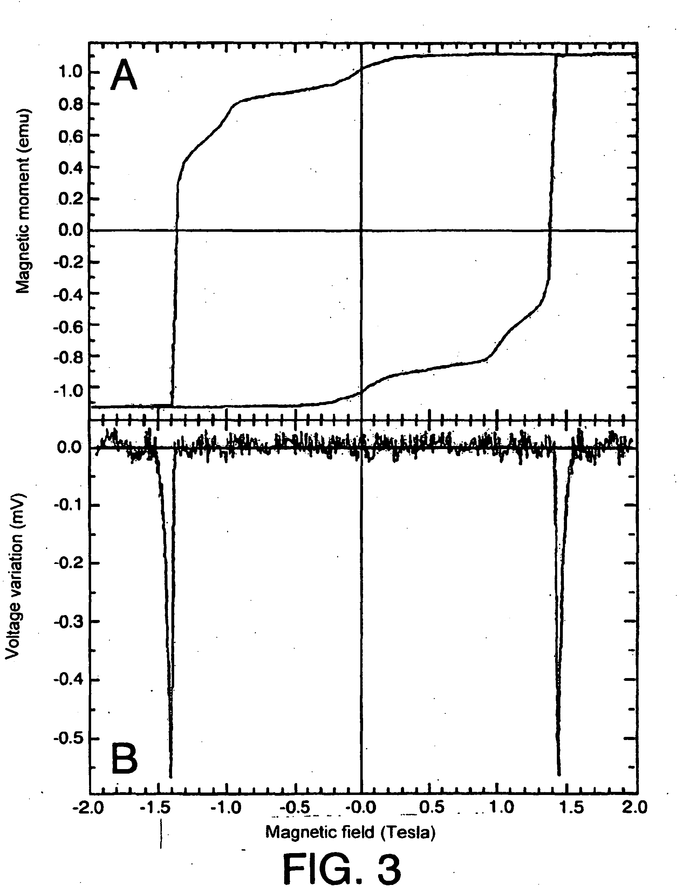

The magnetic field applied on the material varies with time and the rate of variation of that field necessary for producing the avalanche phenomenon depends on the material and on the working temperature. For a greater yield or in order to obtain a high power of the radiation, it is preferable for the magnetic field to vary between the value which saturates the magnetic moment of the material in one direction up to the value which saturates the magnetic moment of the material in the opposite direction. In any case, the variation in magnetic field can take place between other values provided that the magnetic moment of the material is reversed, even if only partially. Fig. 3 shows how the magnetization of a particular material used in the example of experimental embodiment explained below varies as a function of the applied magnetic field.

The production of avalanches is associated with the rapid process of reversal of magnetic moment as a consequence of applying a variable magnetic field. The physical nature of those avalanches can be thermal as in the case of the example of embodiment, or they can be electromagnetic. Such avalanches occur as defined values of the magnetic field and for certain values of the rate of variation of the magnetic field. During those avalanches, the magnetic moment of the material varies from its value M to -M.

As a consequence of the appearance of the avalanches, the phenomenon of population inversion occurs, in other words, excited spin states become populated in the metastable well of magnetic anisotropy, e.g., Fig. 1. The spin of these levels simultaneously tunnels to the corresponding level on the other side of the magnetic anisotropy barrier giving rise to population inversion in the spin levels of the stable side of the well of the anisotropy barrier.

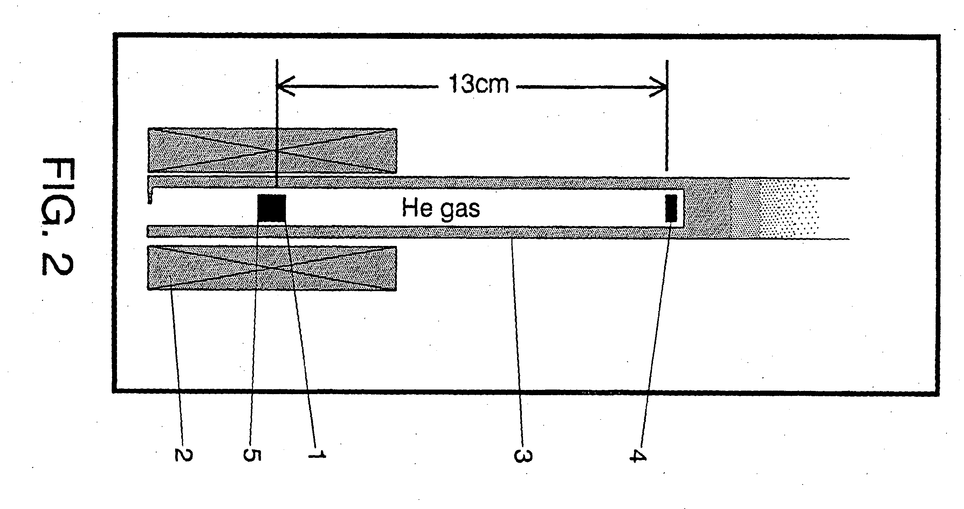

All the molecules participating in the population inversion simultaneously decay, in the form of a cascade, to more stable levels of lower energy, as shown with arrows in the energy diagram of Fig. 1, with coherent electromagnetic radiation being emitted in each process. This results in the emission of electromagnetic waves of different frequencies, each of them corresponding to a jump in energy level to the lower one like those represented in figure 1. This radiation can be detected by means of bolometers as shown in the device of figure 2 of the example of embodiment.

The emission of radiation is thus produced in each of the processes of reversal of the magnetic moment. In each hysteresis cycle there is emission of coherent radiation. The power P emitted can be expressed as follows: P = E1 x N, where E1 is the energy produced per hysteresis cycle and N is the number of cycles per second.

The frequency range of the electromagnetic radiation generated in the described process depends on the magnetic anisotropy and on the value of the magnetic moment of the material as well as on the working temperature and on the rate of variation of the applied magnetic field, with these values being those which determine the population of the spin levels and the electromagnetic transitions between the different spin levels.

A device which can be used for achieving that radiation is shown in figure 2 and is composed of the following elements:
- a housing for the sample 1 bathed in helium gas,
- a superconductor magnet 2,
- a copper wave-guide 3,
- an InSb bolometer 4,
- a thermometer 5,
all of them located inside a SQUID commercial magnetometer.

This device of Figure 2 is in fact an experimental device. In this case, the sample was prepared by joining twenty crystals of Mn12-Ac of volume V = 22 mm3, though it would be equally possible to use Fe8, in other words, [(C₆H₁₅N₃)6Fe₈(µ₃-O)₂(µ₂-OH)₁₂(Br₇(H₂O))Br₈H₂O], or molecular aggregates of the same type, as material for the sample. With the aid of chemical, infrared and X-ray methods, and with SQUID magnetometry, the conventional composition, the lattice structure and the magnetic properties of the crystals were confirmed. The crystals were stuck one to another with the "c" axes parallel and out of line by a maximum of five degrees. The array was placed inside a cylindrical copper wave-guide of diameter 5 mm, with the "c" axis approximately parallel to the axis of the guide. An InSb bolometer was located inside the guide 13 cm above the sample. The unit was introduced inside a commercial SQUID magnetometer, with the sample in the centre of the measurement area of the magnetometer. The refrigerating agent was He gas. The voltage drop in the bolometer, measured with constant current of 0.5 µA, permitted the resistance of the bolometer to be obtained, which fell in a known way when the bolometer absorbed radiation. The bandwidth of the commercial InSb bolometer was 60GHz - 3THz. Measurement by the bolometer requires electronics associated to the same, which constitutes a source of noise in the voltage of the order of 10 µV. Before carrying out measurements on the sample, the bolometer was placed inside the measurement area of the magnetometer and the dependence of the resistance of the bolometer with the temperature and the magnetic field was obtained. The magnetic field was applied in the direction of the axis of the track. The reading of the bolometer was calibrated bearing in mind the knowledge previously obtained of its magnetoresistance.

Figure 3 shows the magnetization curve of a sample of 20 crystals obtained by sweeping the values of the magnetic field from -2T to 2T at a temperature of 2K. For a sweeping rate of the magnetic field of between 5 mT/s and 27 mT/s, the avalanches occurred repeatedly for field values of approximately ± 1.4 T. At the moment of the avalanche, the temperature of the crystals measured by the thermometer in thermal contact with the sample briefly rose by 2K, from 2K to 4K.

Fig. 3 shows two radiation peaks measured by the InSb bolometer during the complete magnetization cycle at a field sweeping rate of 27 mT/s. These peaks have been observed in hundreds of hysteresis cycles and are completely reproducible as far as their position and height are concerned. They coincide precisely with the avalanches. It has been confirmed experimentally that when the sweeping rate falls from 27 mT/s to 2.7 mT/s, the radiation pulses become smoothed out and disappear below the noise level. A similar behaviour occurs when the temperature is increased.

A device for putting the invention into practice will in general have means of control of the magnetic field applied to the sample so that the variation in that field can be such that produces an avalanche phenomenon (thermal or electromagnetic) in the sample.

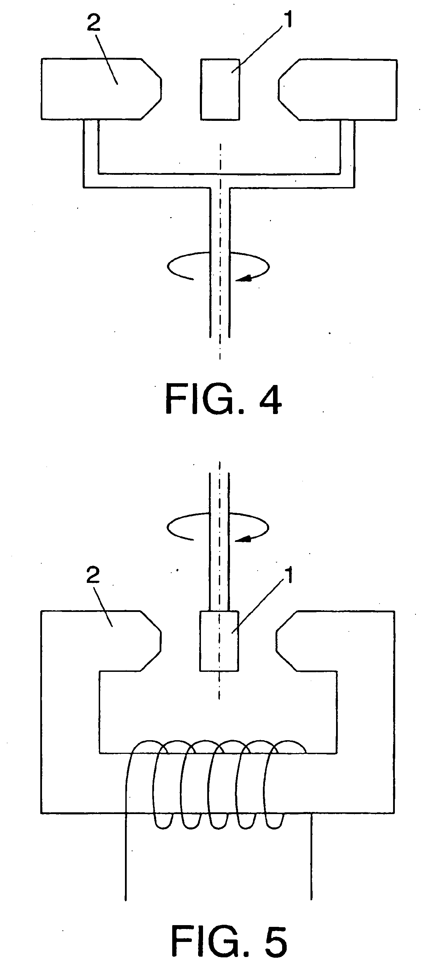

In a first example of embodiment, said generator device of a variable magnetic field as a function of time comprises a permanent magnet, an electromagnet or a superconductor, and means for rotating it in relation to the sample as represented in figure 4, with the parts already described when referring to the experimental example of figure 2 being indicated with the same numerical references.

Alternatively, said generator device of a variable magnetic field as a function of time can comprise an electromagnet fed by a variable current.

In accordance with an alternative version, the device for generating coherent electromagnetic radiation (see Fig. 5) of frequency between 1 GHz and 10 THz comprises:
- a housing for the sample,
- a generator device of the magnetic field,
- means for maintaining said sample at a temperature at which the material displays magnetic hysteresis phenomena under the effect of a magnetic field,
- a temperature probe,
- an electromagnetic radiation detector,
- means for making that sample rotate in the magnetic field

In accordance with that device, it is possible to achieve rates of variation of the field perceived by the sample lying between approximately 1.5 T/s to 10³ T/s.

As has been stated when referring to the features of the method, in any of the embodiments of the device, provision has been made for inclusion of a generator of heat pulses for the sample at the same rate at which changes occur in the magnetic field applied to, or perceived by that sample, with which the radiation power is incremented.

Likewise, during the course of new researches it has been confirmed that for a sample arranged in a cavity under the effect of a magnetic field at a temperature in which the material displays magnetic hysteresis phenomena, when that magnetic field is varied as a function of time, it gives rise to a population inversion and to the emission of coherent electromagnetic radiation with various wavelengths λ.

Moreover, for certain samples of molecular magnets and certain variations of magnetic field, the power of electromagnetic radiation emitted by approximately 25 mg of sample can be of the order of 1 W when the temperature of the sample varies between 1.8° K and 2.4° K.

More specifically, for certain samples of molecular magnets and certain variations of magnetic field, the power of electromagnetic radiation emitted by approximately 25 mg of sample preferably varies between 1 µW and 0.1 µW when the temperature of the sample varies between 1.8° K and 2.4° K.

It has also been verified that when a single monocrystal of magnetic sample is used the duration of the pulse of electromagnetic radiation lasts for tenths of ms. The bolometer continues to detect radiation after this rapid electromagnetic pulse during several ms until it returns to the background noise level.

In the same way, it has been verified that the power of the radiation detected increases when several monocrystals are used together, with all of them possessing the same crystallographic orientation. In this case the duration of the electromagnetic pulse is of the order of 1 ms.

The emission of radiation is clearly related to the occurrence of magnetic avalanches in which the magnetic moment of the sample reverses its orientation in a time of less than 1 ms.

Likewise, with the new experiments it has been confirmed that the appearance of magnetic avalanches can be produced before or after the emission of electromagnetic radiation.

The electromagnetic radiation generated after the occurrence of the magnetic avalanche is mostly emitted in the direction of the axis of easy magnetization, while the radiation that is originated prior to the occurrence of the magnetic avalanche is mostly emitted in the direction perpendicular to the axis of easy magnetization.

It has also be confirmed that the variation of the magnetic field can be produced at a rate or speed of up to 100 mT/s.

It has likewise been confirmed that the variations in the magnetic field occurring when a permanent magnet, electromagnet or superconductor is made to rotate in the vicinity of the sample, in such a way that the magnetic field generated affects it in a variable manner, can reach rates of variation of the field lying between approximately 10 mT/s and 10 kT/s.

In accordance with that proven earlier, the variation in the magnetic field can be produced by means of changes in the current strength circulating in a superconductor in the vicinity of the sample in such a way that the magnetic field that is generated affects it.

The material used as sample can likewise be [(C₆H₁₅N₃)6Fe₈(µ₃-O)₂(µ₂-OH)₁₂(Br₇(H₂O))Br₈H₂O] or molecular aggregates of the same type, these molecular aggregates also being known as molecular magnets and high spin and high magnetic anisotropy molecules.

For transporting radiation from the magnetic sample up to the bolometer, use has been made of cylindrical wave-guides made of copper, stainless steel or insulating material coated with a good conductor, such as for example plastic coated with copper (Cu) or gold (Au).

Likewise, in the generation of electromagnetic radiation, different cryostats have been used in which the sample was cooled to the desired temperature.

The permanent magnets can be of different materials, and so permanent magnets of alloys of SmCo and NdFeB have been used for generating the necessary magnetic field in magnetization and demagnetization processes of the magnetic samples. In these cases the time variation of the magnetic field was produced by rotating the magnet, with variations in the magnetic field being produced with a speed of up to 10³ T/s.

The rapid process of magnetization and demagnetization of the magnetic samples can also be achieved by means of pulsating magnetic fields having a duration of a few microseconds and which permit the field to be varied at speeds of up to 10⁴ T/s.

The analysis of the radiation generated has been conducted via the use of radiation spectrometers and lattice analysers working in the frequency range from 50 MHz to 115 GHz, with the emission of electromagnetic radiation being verified in monocrystals of different compounds of molecular spins, such as for example monocrystals of deuterated Mn₁₂ and Mn₁₂-Br.

In the detection of radiation, different bolometers have been used with different values of what is called the responsivity, which is the parameter which determines its efficiency in the detection of electromagnetic radiation.

The reversal of the magnetic moment of the samples has been verified in two different ways: The first is by means of using a SQUID magnetometer and the second is by means of using a copper coil which covered the whole of the magnetic sample, in such a way that the reversal of the magnetic moment of the samples takes place in a time of less than 1 ms.

Finally, we can state that different measurements, such as for example the speed of rotation of the electromagnet, the electric current circulating through that electromagnet and the value of the magnetic field, can be measured with commercial sensors, such as Hall sensors.

## Claims

1. Method for generating coherent electromagnetic radiation of a frequency comprised between 1 GHz and 10 THz using a sample consisting of a crystalline or polycrystalline molecular magnet possessing energy levels on both sides of the magnetic anisotropy barrier, comprising:
subjecting the sample located in a cavity to a magnetic field and to a temperature in which the material displays magnetic hysteresis phenomena,
varying the magnetic field as a function of time in such a way that provokes a phenomenon of thermal or electromagnetic avalanche which produces a population inversion, and
emitting coherent electromagnetic radiation with various wavelengths λ,
**characterized in that** pulses of heat are also supplied at the same repetition rate at which the variations repetitively occur in the magnetic field applied to or perceived by the sample.

2. Method for generating coherent electromagnetic radiation according to claim 1, **characterized in that** said radiation is superradiance, the size of the sample being less than the shortest of the wavelengths λ at which the material of the sample can emit.

3. Method for generating coherent electromagnetic radiation according to claim 1, **characterized in that** the sample is arranged in a cavity under the effect of a magnetic field of fixed intensity.

4. Method for generating coherent electromagnetic radiation according to claim 1, **characterized in that** the orientation of the sample is varied, rotating it with respect to the magnetic field as a function of time.

5. Method according to claims 1 to 4, **characterized in that** the material used as sample is Mn₁₂ acetate.

6. Method according to claims 1 to 4, **characterized in that** the material used as sample is [(C₆H₁₅N₃) 6Fe₈ ( µ3-O)₂ (µ₂-OH)₁₂(Br₇(H₂O))Br₈H₂O].

7. Method according to claim 1, **characterized in that** said variation in the magnetic field as a function of time produces a rate or speed with a value lying in an interval of between 5mT/s and 27mT/s.

8. Method according to claim 1, 2, 5 or 6, **characterized in that** the variation in the magnetic field is done by causing a permanent magnet, electromagnet or superconductor to rotate in the vicinity of the sample in such a way that the magnetic field generated affects it in a variable manner, and in which rates of variation of the field are between approximately 1.5 T/s and 10³ T/s.

9. Method according to claim 1, 2, 5 or 6, **characterized in that** the variation in the magnetic field is done by means of changes in the current strength circulating in an electromagnet in the vicinity of the sample in such a way that the magnetic field generated affects it.

10. Method according to claim 1, 2, 5 or 6, **characterized in that** the variation in the magnetic field is done by means of changes in the current strength circulating in an electromagnet in the vicinity of the sample at the same time carrying out a rotary movement of the electromagnet in such a way that the magnetic field generated affects it.

11. Method according to claims 1 to 4 **characterized in that** the temperature of the sample is refrigerated to 1K by a refrigerating agent and is measured to be several tens of Kelvin when the phenomenon of thermal avalanche takes place.

12. Method according to claim 11, **characterized in that** the material used for the sample is Mn₁₂ acetate and in which the temperature of the sample is refrigerated to 2K and is measured to be 4K when the phenomenon of thermal avalanche takes place.

13. Method according to claim 1 **characterized in that** for samples of molecular magnets, for example that known as Fe8, and variations of the magnetic field, the power of electromagnetic radiation emitted by approximately 25 mg of sample is of the order of 1 W when the temperature of the sample varies between 1.8 K and 2.4 K.

14. Method according to claim 1 or 13 **characterized in that** for samples of molecular magnets and variations of the magnetic field, the power of electromagnetic radiation emitted by approximately 25 mg of the sample varies between 1 µW and 0.1µW when the temperature of the sample varies between 1.8K and 2.4K.

15. Method according to claim 1 **characterized in that** the magnetic avalanches are produced before or after the emission of electromagnetic radiation.

16. Method according to claim 1 or 15 **characterized in that** the electromagnetic radiation generated after the occurrence of the magnetic avalanche is mostly emitted in the direction of the axis of easy magnetization, while the radiation that is originated prior to the occurrence of the magnetic avalanche is mostly emitted in the direction perpendicular to the axis of easy magnetization.

17. Method according to claim 1 or 7 **characterized in that** the variation of the magnetic field is produced at a rate or speed of up to 100 mT/s.

18. Method according to claim 1 or 8 **characterized in that** the rates of variation in the magnetic field occurring when a permanent magnet, electromagnet or superconductor is made to rotate in the vicinity of the sample, in such a way that the magnetic field generated affects it in a variable manner, are between approximately 10 mT/s and 10 kT/s.

19. Method according to claim 1 or 10 **characterized in that** the variation in the magnetic field is produced by means of changes in the current strength circulating in a superconductor in the vicinity of the sample in such a way that the magnetic field that is generated affects it.

20. Method according to claim 1 **characterized in that** the magnetic moment of the material caused by the variation of the magnetic field, is reversed only partially.

21. Method according to claim 1 **characterized in that** the sample comprises monodomain magnetic particles with magnetic anisotropy.

22. Device for generating coherent electromagnetic radiation of frequency comprised between 1 GHz and 10 THz using a sample (1) including a crystalline or polycrystalline molecular magnet possessing energy levels on both sides of the magnetic anisotropy barrier, comprising:
a housing (3) for the sample,
a generator device (2) of a magnetic field which is variable as a function of time,
means for maintaining said sample (1) at a temperature at which the material displays magnetic hysteresis phenomena in a magnetic field,
a temperature probe (5),
an electromagnetic radiation detector (4), and
a generator of heat pulses to be supplied to the sample (1),
wherein the generator is set to operate at the same repetition rate at which the variations in the magnetic field, applied to or perceived by the sample (1), repetitively take place.

23. Device, according to claim 22 **characterized in that** it is provided with control means of said magnetic field so that said variation produces a phenomenon of thermal or electromagnetic avalanche in the sample (1).

24. Device, according to claim 22 **characterized in that** said generator device (2) of a variable magnetic field as a function of time comprises a permanent magnet, an electromagnet or a superconductor, and means for rotating the same with respect to the sample.

25. Device, according to claim 22 **characterized in that** said generator device (2) of a variable magnetic field as a function of time comprises an electromagnet fed with variable current or a superconductor magnet.

26. Device, according to claim 22 or 24 **characterized in that** it has means for causing the sample (1) to rotate within the said magnetic field.

27. Use of a method according to claims 1 - 21 for a non destructive security control.

## Patentansprüche

1. Verfahren zum Erzeugen kohärenter elektromagnetischer Strahlung einer Frequenz zwischen 1 GHz und 10 THz mittels einer Materialprobe bestehend aus einem kristallinen oder polykristallinen molekularen Magneten, der Energieniveaus zu beiden Seiten der magnetischen Anisotropie-Barriere besitzt, und wobei das Verfahren umfasst:
Unterwerfen der in einem Hohlraum angeordneten Probe unter ein magnetisches Feld und eine Temperatur, wobei das Material magnetische Hysterese-Erscheinungen zeigt,
Variieren des magnetischen Feld als eine Funktion der Zeit in der Weise, dass ein Phänomen der thermischen oder elektromagnetischen Lawine hervorgerufen wird, die eine Populations-Inversion erzeugt, und
Emittieren kohärenter elektromagnetischer Strahlung mit verschiedenen Wellenlängen λ,
**dadurch gekennzeichnet, dass** auch Wärmeimpulse mit derselben Wiederholrate zugeführt werden, mit der die Variationen in dem magnetischen Feld, das auf die Probe angewendet oder von ihr aufgenommen wird wiederholt auftreten.

2. Verfahren zum Erzeugen kohärenter elektromagnetischer Strahlung nach Patentanspruch **dadurch gekennzeichnet, dass** die Strahlung Superstrahlung (Superradiance) ist, wobei die Größe der Probe kleiner als die kürzeste der Wellenlängen λ ist, mit der das Material der Probe emittieren kann.

3. Verfahren zum Erzeugen kohärenter elektromagnetischer Strahlung nach Patentanspruch **dadurch gekennzeichnet, dass** die Probe in einem Hohlraum unter der Wirkung eines Magnetfeldes fester Intensität angeordnet wird.

4. Verfahren zum Erzeugen kohärenter elektromagnetischer Strahlung nach Patentanspruch **dadurch gekennzeichnet, dass** die Orientierung der Probe variiert wird, indem sie bezüglich des Magnetfelds als eine Funktion der Zeit rotiert.

5. Verfahren nach den Patentansprüchen 1 bis 4,
**dadurch gekennzeichnet, dass** das als Probe benutzte Material Mn₁₂-Azetat ist.

6. Verfahren nach den Patentansprüchen 1 bis 4,
**dadurch gekennzeichnet, dass** das als Probe benutzte Material [(C₆H₁₅N₃) 6Fe₈ (µ₃-O) ₂ (µ₂-OH) ₁₂ (Br₇ (H₂O)) Br₈H₂O].

7. Verfahren nach Patentanspruch 1,
**dadurch gekennzeichnet, dass** die besagte Variation des Magnetfelds als eine Funktion der Zeit eine Rate oder Geschwindigkeit mit einem Wert erzeugt, der in einem Intervall zwischen 5mT/s und 27mT/s liegt.

8. Verfahren nach Patentanspruch 1, 2, 5 oder 6,
**dadurch gekennzeichnet, dass** die Variation im Magnetfeld **dadurch** vollführt wird, dass ein Permanentmagnet, Elektromagnet oder Supraleiter in der Nähe der Probe in der Weise rotiert, dass das erzeugte Magnetfeld die Probe auf variable Weise beaufschlagt, und wobei Variations-Raten des Felds zwischen ungefähr 1,5 T/s und 10³T/s liegen.

9. Verfahren nach Patentanspruch 1, 2, 5 oder 6,
**dadurch gekennzeichnet, dass** die Variation des Magnetfelds mittels Änderungen der Stärke des in einem Elektromagnet in der Nähe der Probe zirkulierenden Stroms vorgenommen wird, so dass das erzeugte Magnetfeld die Probe beeinflusst.

10. Verfahren nach Patentanspruch 1, 2, 5 oder 6,
**dadurch gekennzeichnet, dass** die Variation des Magnetfelds mittels Änderungen der Stärke des in einem Elektromagnet in der Nähe der Probe zirkulierenden Stroms vorgenommen wird,
wobei gleichzeitig eine Rotation des Elektromagneten derart ausgeführt wird, dass das erzeugte Magnetfeld die Probe beeinflusst.

11. Verfahren nach den Patentansprüchen 1 bis 4,
**dadurch gekennzeichnet, dass** die Temperatur der Probe durch ein Gefriermittel auf 1 K abgekühlt wird und zu mehreren Zehnern Kelvin gemessen wird, wenn das Phänomen der thermischen Lawine auftritt.

12. Verfahren nach Patentanspruch 11,
**dadurch gekennzeichnet, dass** das für die Probe benutzte Material Mn₁₂-Azetat ist, und wobei die Temperatur der Probe auf 2 K abgekühlt wird, und 4 K gemessen werden, wenn das Phänomen der thermischen Lawine auftritt.

13. Verfahren nach Patentanspruch 1,
**dadurch gekennzeichnet, dass** für Proben molekularer Magneten, beispielweise solche als Fe8 bekannte, und bei Variationen des Magnetfelds, die Leistung der durch ungefähr 25 mg der Probe emittierten elektromagnetischen Strahlung in der Größenordnung von 1 W ist, wenn die Temperatur der Probe zwischen 1,8 K und 2,4 K variiert.

14. Verfahren nach Patentanspruch 1 oder 13
**dadurch gekennzeichnet, dass** für Proben molekularer Magneten und bei Variationen des Magnetfelds die Leistung der durch ungefähr 25 mg der Probe emittierten elektromagnetischen Strahlung zwischen 1 µW und 0,1 µW variiert, wenn die Temperatur der Probe zwischen 1,8 K und 2,4 K variiert.

15. Verfahren nach Patentanspruch 1,
**dadurch gekennzeichnet, dass** die magnetischen Lawinen vor oder nach der Emission der elektromagnetischen Strahlung hervorgerufen werden.

16. Verfahren nach Patentanspruch 1 oder 15,
**dadurch gekennzeichnet, dass** die nach Auftreten der magnetischen Lawine erzeugte elektromagnetische Strahlung zum größten Teil in Richtung der Achse der einfachen Magnetisierung emittiert wird, während diejenige Strahlung, die vor dem Auftreten der magnetischen Lawine hervorgerufen wird, zum größten Teil in Richtung senkrecht zur Achse einfacher Magnetisierung emittiert wird.

17. Verfahren nach Patentanspruch 1 oder 7,
**dadurch gekennzeichnet, dass** die Variation des Magnetfelds mit einer Rate oder Geschwindigkeit von bis zu 100 T/s erzeugt wird.

18. Verfahren nach Patentanspruch 1 oder 8,
**dadurch gekennzeichnet, dass** die Variations-Raten im Magnetfeld, die sich ereignen, wenn ein Permanentmagnet, Elektromagnet oder Supraleiter zum Rotieren in der Nachbarschaft der Probe in der Weise veranlasst wird, dass das erzeugte Magnetfeld die Probe auf variable Weise beeinflusst, zwischen ungefähr 10 mT/s und 10 kT/s liegen.

19. Verfahren nach Patentanspruch 1 oder 10,
**dadurch gekennzeichnet, dass** die Variation im Magnetfeld mittels Änderungen in der Stärke des Stroms erzeugt wird, der in einem Supraleiter in der Nähe der Probe in der Weise zirkuliert, so dass das erzeugte Magnetfeld die Probe beeinflusst.

20. Verfahren nach Patentanspruch 1,
**dadurch gekennzeichnet, dass** das durch die Variation des Magnetfelds verursachte magnetische Moment des Materials nur partiell umgekehrt wird.

21. Verfahren nach Patentanspruch 1,
**dadurch gekennzeichnet, dass** die Probe monodomäne magnetische Partikel mit magnetischer Anisotropie enthält.

22. Vorrichtung zum Erzeugen kohärenter elektromagnetischer Strahlung einer Frequenz zwischen 1 GHz und 10 THz mittels einer Materialprobe (1), die einen kristallinen oder polykristallinen molekularen Magneten aufweist, der Energieniveaus zu beiden Seiten der magnetischen Isotropie-Barriere besitzt, wobei die Vorrichtung folgendes aufweist:
Ein Gehäuse (3) für die Probe,
eine Generatorvorrichtung (2) eines Magnetfelds, das als eine Funktion der Zeit variabel ist, Mittel zum Aufrechterhalten der Probe (1) bei einer Temperatur, bei der das Material ein magnetisches Hysterese Phänomen in einem Magnetfeld zeigt,
eine Temperatursonde (5),
einen Detektor (4) elektromagnetischer Strahlung, und
einen Generator von Wärmeimpulsen, die zu der Probe (1) zugeführt werden sollen,
wobei der Generator für den Betrieb mit derselben Wiederholrate eingestellt ist, bei der die Variationen im Magnetfeld, das auf die Probe (1) angewendet oder von ihr aufgenommen wird, wiederholend stattfinden.

23. Vorrichtung nach Patentanspruch 22,
**dadurch gekennzeichnet, dass** sie mit Steuerungsmitteln des Magnetfelds ausgerüstet ist, so dass die Variation ein Phänomen thermischer oder elektromagnetischer Lawine in der Probe (1) auslöst.

24. Vorrichtung nach Patentanspruch 22,
**dadurch gekennzeichnet, dass** die Generatorvorrichtung (2) eines variablen Magnetfelds als eine Funktion der Zeit einen Permanentmagneten, einen Elektromagneten oder einen Supraleiter aufweist, sowie Mittel zu dessen Rotation bezüglich der Probe.

25. Vorrichtung nach Patentanspruch 22,
**dadurch gekennzeichnet, dass** die Generatorvorrichtung (2) eines variablen Magnetfelds als eine Funktion der Zeit einen Elektromagneten aufweist, der mit variablem Strom gespeist wird, oder einen Supraleiter-Magneten.

26. Vorrichtung nach Patentanspruch 22 oder 24,
**dadurch gekennzeichnet, dass** sie Mittel aufweist, welche die Probe (1) veranlassen, im Magnetfeld zu rotieren.

27. Verwendung eines Verfahrens nach den Patentansprüchen 1 bis 21 für eine zerstörungsfreie Sicherheitskontrolle.

## Revendications

1. Un procédé pour générer un rayonnement électromagnétique cohérent d'une fréquence comprise entre 1 GHz et 10 THz en utilisant un échantillon comportant un aimant moléculaire cristallin ou polycristallin possédant des niveaux d'énergie sur les deux côtés de la barrière d'anisotropie magnétique, consistant à :
soumettre l'échantillon situé dans une cavité à un champ magnétique et à une température à laquelle le matériau présente des phénomènes d'hystérèse magnétique,
varier le champ magnétique en fonction du temps de manière à provoquer un phénomène d'avalanche thermique ou électromagnétique produisant une inversion de la population, et
émettant un rayonnement électromagnétique cohérent présentant diverses longueurs d'onde λ
**caractérisée en ce que** des impulsions de chaleur sont également ajoutées au même taux de répétition que la vitesse à laquelle des variations arrivent de manière répétitive dans le champ magnétique appliqué à ou bien perçu par l'échantillon.

2. Un procédé pour générer un rayonnement électromagnétique cohérent selon la Revendication 1, **caractérisé en ce que** le rayonnement précité est un superrayonnement, la taille de l'échantillon étant inférieure à la plus courte longueur d'onde λ à laquelle le matériau de l'échantillon peut émettre.

3. Un procédé pour générer un rayonnement électromagnétique cohérent selon la Revendication 1, **caractérisé en ce que** l'échantillon est placée dans une cavité sous l'effet d'un champ magnétique d'intensité fixe.

4. Un procédé pour générer un rayonnement électromagnétique cohérent selon la Revendication 1, **caractérisé en ce que** l'orientation de l'échantillon varie lorsque qu'une rotation est opérée par rapport au champ magnétique en fonction du temps.

5. Un procédé selon les Revendications 1 à 4, **caractérisé en ce que** le matériau utilisé comme échantillon est de l'acétate Mn₁₂.

6. Un procédé selon les Revendications 1 à 4, **caractérisé en ce que** le matériau utilisé comme échantillon est F(C₆H₁₅N₃) 6Fe₈ (µ₃ - O)₂ (µ₂ - OH)₁₂(Br₇(H₂O))Br₈H₂O].

7. Un procédé selon la Revendication 1 **caractérisé en ce que** la variation précitée du champ magnétique en fonction du temps produit un taux ou une vitesse d'une valeur se situant dans l'intervalle 5mT/s et 27mT/s.

8. Un procédé selon les Revendications 1, 2, 5 ou 6 **caractérisé en ce que** la variation du champ magnétique est causée par la rotation d'un aimant permanent, un électroaimant ou un super conducteur à proximité de l'échantillon de manière que le champ magnétique généré l'affecte d'une certaine manière, et **en ce que** les taux de variation du champ se situent approximativement entre 1,5T/s et 10³ T/s.

9. Un procédé selon les Revendications 1, 2, 5 ou 6 **caractérisé en ce que** la variation du champ magnétique est causée par le changement de l'intensité électrique circulant dans un électroaimant à proximité de l'échantillon de manière que le champ magnétique généré l'affecte.

10. Un procédé selon les Revendications 1, 2, 5 ou 6 **caractérisé en ce que** la variation du champ magnétique est causée par le changement de l'intensité électrique circulant dans un électroaimant à proximité de l'échantillon, effectuant en même temps un mouvement rotatif de l'électroaimant de manière que le champ magnétique généré l'affecte.

11. Un procédé selon les Revendications 1 à 4 **caractérisé en ce que** la température de l'échantillon est abaissée à 1K par un agent réfrigérant et qu'une mesure de plusieurs dizaines de Kelvin est réalisée lorsque le phénomène d'avalanche thermique a lieu.

12. Un procédé selon la Revendication 11 **caractérisé en ce que** le matériau employé pour l'échantillon est de l'acétate Mn₁₂ et dans lequel la température de l'échantillon est abaissée à 2K par un agent réfrigérant et qu'une mesure de 4K est réalisée lorsque le phénomène d'avalanche thermique a lieu.

13. Un procédé selon la Revendication 1 **caractérisé en ce que** pour des échantillons d'aimants moléculaires, par exemple ceux connus sous la formule Fe8, et des variations du champ magnétique, la puissance du rayonnement électromagnétique émis par environ 25 mg d'échantillon varie entre 1µW et 0,1µW lorsque la température de l'échantillon varie de 1,8K et 2,4K.

14. Un procédé selon les Revendications 1 ou 13 **caractérisé en ce que** pour des échantillons d'aimants moléculaires et des variations du champ magnétique, la puissance du rayonnement électromagnétique émis par environ 25 mg d'échantillon varie entre 1µW et 0,1µW lorsque la température de l'échantillon varie de 1,8K et 2,4K.

15. Un procédé selon la Revendication 1 **caractérisé en ce que** les avalanches thermiques sont produites avant et après l'émission du rayonnement électromagnétique.

16. Un procédé selon les Revendications 1 ou 15 **caractérisé en ce que** le rayonnement électromagnétique généré après l'apparition de l'avalanche magnétique est principalement émis dans la direction de l'axe de magnétisation facile, tandis que le rayonnement généré avant l'apparition de l'avalanche magnétique est principalement émis dans la direction perpendiculaire à l'axe de magnétisation facile.

17. Un procédé selon les Revendications 1 ou 7 **caractérisé en ce que** la variation du champ magnétique est produite à un taux ou une vitesse allant jusqu'à 100 mT/s.

18. Un procédé selon les Revendications 1 ou 8 **caractérisé en ce que** les taux de variation du champ magnétique se produisant lorsque la rotation d'un aimant permanent, un électroaimant ou un super conducteur est effectuée à proximité de l'échantillon de manière que le champ magnétique généré l'affecte de manière variable, se situent approximativement entre 10 mT/s et 10kT/s.

19. Un procédé selon les Revendications 1 ou 10 **caractérisé en ce que** la variation du champ magnétique est produite en modifiant la tension électrique circulant dans un super conducteur à proximité de l'échantillon de manière que le champ magnétique qui est généré l'affecte.

20. Un procédé selon la Revendication 1 **caractérisé en ce que** le moment magnétique du matériau causé par la variation du champ magnétique n'est que partiellement inversé.

21. Un procédé selon la Revendication 1 **caractérisé en ce que** l'échantillon est constitué de particules magnétiques monodomaines avec anisotropie magnétique.

22. Un dispositif pour générer un rayonnement électromagnétique cohérent d'une fréquence comprise entre 1 GHz et 10 THz en utilisant un échantillon (1) comportant un aimant moléculaire cristallin ou polycristallin possédant des niveaux d'énergie sur les deux côtés de la barrière d'anisotropie magnétique, comprenant :
un boitier (3) pour l'échantillon,
un dispositif de génération (2) d'un champ magnétique variable en fonction du temps,
des moyens pour maintenir l'échantillon (1) précité à une température à laquelle le matériau présente des phénomènes d'hystérèse magnétique dans un champ magnétique.
une sonde de température (5)
un détecteur de rayonnement électromagnétique (4), et
un générateur d'impulsions de chaleur à transmettre à l'échantillon (1),
où le générateur est configuré pour fonctionner au même taux de répétition que le taux auquel les variations du champ magnétique appliqué à ou perçu par l'échantillon (1) se produisent de manière répétitive.

23. Un dispositif selon la Revendication 22 **caractérisé en ce qu'**il comporte des moyens de contrôle du champ magnétique précité de manière que la variation précitée produit un phénomène d'avalanche thermique ou électromagnétique dans l'échantillon (1).

24. Un dispositif selon la Revendication 22 **caractérisé en ce que** le dispositif précité de génération (2) de champ magnétique variable en fonction du temps comprend un aimant permanent, un électroaimant ou un super conducteur et le moyen de produire leur rotation par rapport à l'échantillon.

25. Un dispositif selon la Revendication 22 **caractérisé en que** le dispositif précité de génération (2) de champ magnétique variable en fonction du temps comprend un électroaimant alimenté par du courant variable ou un aimant super conducteur.

26. Un dispositif selon les Revendications 22 ou 24 **caractérisé en ce qu'**il présente les moyens de produire la rotation de l'échantillon (1) à l'intérieur du champ magnétique.

27. Utilisation d'un procédé selon les Revendications 1 à 21 pour un contrôle de sécurité non-destructeur.
